# EUROPÄISCHE PATENTSCHRIFT

(11) **EP 1 682 852 B1**
(45) Veröffentlichungstag und Bekanntmachung des Hinweises auf die Patenterteilung: **03.01.2007**
(21) Anmeldenummer: 04765207.8
(22) Anmeldetag: 15.09.2004
(51) Int. Cl.: G01C 7/04, G01V 8/00, E01H 11/00

(54) **VERFAHREN UND VORRICHTUNG ZUR ERKENNUNG UND VERMESSUNG VON VEGETATION IM UMFELD VON VERKEHRSWEGEN**
METHOD AND DEVICE FOR SENSING AND MEASURING VEGETATION IN THE SURROUNDINGS OF TRAFFIC ROUTES
PROCEDE ET DISPOSITIF POUR IDENTIFIER ET MESURER LA VEGETATION AUX ABORDS DE VOIES DE COMMUNICATION

(30) Priorität: 13.11.2003 DE 10353212
(43) Veröffentlichungstag der Anmeldung: 26.07.2006
(73) Patentinhaber: DB Netz AG, 60468 Frankfurt am Main (DE)
(72) Erfinder: SARNES, Bernhard, 85774 Unterföhring (DE); SCHÜSSLER, Stefan, 83539 Pfaffing (DE); HULIN, Bernhard, 81245 München (DE)
(74) Vertreter: Zinken-Sommer, Rainer
(86) Internationale Anmeldenummer: PCT/EP2004/010293
(87) Internationale Veröffentlichungsnummer: WO 2005/047819

(56) Entgegenhaltungen:
- EP-A- 0 418 453
- US-A- 5 936 245

## Beschreibung

Die Erfindung betrifft ein Verfahren zur Erkennung und Vermessung von Vegetation im räumlichen Umfeld von Verkehrswegen unter Verwendung einer die Reflektivität der in diesem Raumbereich befindlichen Objekte im infraroten und sichtbaren Spektralbereich und / oder im infraroten und ultravioletten Spektralbereich kombinierenden Sensoreinheit.

Zum gefahrlosen Betrieb von Verkehrswegen müssen diese im allgemeinen regelmässig von Vegetationsaufwuchs befreit werden, weicher in ein je nach Erfordernis der sich auf dem Verkehrsweg bewegenden Fahrzeuge freizuhaltendes Umgrenzungsprofil hineinragt. Hierzu erfolgen üblicherweise Rückschnittmassnahmen in festen zeitlichen Abständen. Im Zuge des allgemeinen Trends zur Aufwandsreduzierung bei der Unterhaltung von Verkehrs-Infrastruktur werden meist Anstrengungen unternommen, die zeitintervall-orientierte Durcharbeitung mittels einer zustandsorientierten Durcharbeitung zu ersetzen. Hierzu sind nach bisherigem Stand der Technik regelmässige Inspektionen durch Unterhalts-Personal erforderlich. Die Bewertung und Quantifizierung der zurückzuschneidenden Vegetation erfordert jedoch eine fachmännische Beurteilung, die üblicherweise nicht "im Vorbeigehen" erledigt werden kann. Andernfalls besteht die Gefahr, dass der Rückschnitt zu intensiv oder zu mässig ausfällt. Ein zu intensiver Rückschnitt ist aus Umweltschutz- und Kostengründen ebenso wie ein zu mässiges Rückschneiden, was zu frühe Nachfolge-Massnahmen erforderlich machen würde, zu vermeiden. Damit kein spezielles Personal zur Beschau der den Verkehrsweg säumenden Vegetation vorgehalten muss, besteht ein grundsätzliches Interesse an einer automatisierten Vegetationserkennung, welche beispielsweise im Rahmen anderweitig notwendiger tournusmässiger Inspektionsfahrten (z.B. bei der Überprüfung des Oberbaus von Schienenverkehrswegen mittels Messwagen) parallel erledigt werden könnte.

Aus der Patentschrift DE 44 13 739 ist eine Einrichtung zum Erkennen und Unterscheiden von Bodenbereichen und Pflanzen sowie zum Unterscheiden zwischen Wild- und Kulturpflanzen bekannt, bei der eine aus jeweils einem Detektor für infrarotes und sichtbares Licht aufgebaute Sensoreinheit zum Einsatz kommt, mittels der die Unterschiede in den Strahlungseigenschaften (Reflexion, Emission) unterschiedlicher Pflanzenarten und des Bodens erfasst und ausgewertet werden. Zur Detektion des Unterschiedes zwischen unbewachsenem Boden und Bewuchs wird die bekannte Tatsache ausgenutzt, dass die chlorophyllhaltige Vegetation im nahen infraroten Bereich wesentlich mehr Licht reflektiert als nicht-chlorophyllhaltige Objekte. Die Unterscheidung zwischen Wild- und Kulturpflanze erfolgt anhand zuvor an Musterproben beider Bewuchstypen aufgenommener charakteristischer digitaler Signaturen. Diese Anwendung beschränkt sich jedoch auf die zweidimensionale Erfassung der Vegetationsverhältnisse nahe der Bodenoberfläche und ist für die Erfassung und Bewertung räumlicher Vegetationsverhältnisse nicht geeignet. In ähnlicher Weise ist aus DE 100 16 688 ein Verfahren zur Erfassung von Tieren und / oder Gelegen von Bodenbrütern in deren natürlichem Lebensraum bekannt, bei dem aus einer mittels eines auf den Erdboden ausgerichteten Sensorik die relative Infrarot-Strahlungsdifferenz und / oder relative Feuchteänderung und / oder relative Änderung der Radarrückstreuung entlang jeweils eines bei der Bewegung eines den Sensor tragenden Fahrzeuges abgetasteten Geländestreifens erfasst wird.
Desweiteren sind aus der Stereographie verschiedenste Verfahren bekannt, bei der die Entfernung zwischen beispielsweise zwei Kameras und einem in einem von den Kameras erfassten Raumbereich liegenden Zielobjekt durch einen Mustervergleich der von den beiden Kameras aufgenommenen Bilder des gleichen Raumbereiches bestimmt wird. Hierbei werden die von den beiden Kameras aufgenommenen Bilder ausschnittsweise zur Überdeckung gebracht und aus dem Winkel, den die beiden Betrachtungsrichtungen der Kameras einschliessen, sowie dem Abstand zwischen diesen beiden Kameras die Entfernung zum Zielobjekt bestimmt. Entsprechende Verfahren sind beispielsweise dem Fachbuch "Three dimensional computer vision: a geometric viewpoint" (Olivier Faugeras; MIT Press; 1993; Cambridge, USA) zu entnehmen.

Der Erfindung liegt die Aufgabe zugrunde, ein Verfahren sowie eine Vorrichtung zur Erkennung und Vermessung von Vegetation im räumlichen Umfeld von Verkehrswegen unter Verwendung einer die Reflektivität der in diesem Raumbereich befindlichen Objekte im infraroten und sichtbaren Spektralbereich und / oder im infraroten und ultravioletten Spektralbereich kombinierenden Sensoreinheit bereitzustellen, bei dem nicht nur das Vorhandensein von Vegetation detektiert, sondern diese vorhandene Vegetation auch sicher gegenüber anderen im Nahbereich des Verkehrsweges vorhandenen Nutzobjekten abgegrenzt und in geometrischen Dimensionen quantifizierbar erfasst wird.
Insbesondere wird angestrebt, die aus Vegetationseinflüssen (z.B. umgestürzte Bäume oder bei Sturm in die Oberleitung von Eisenbahnlinien gewehte Äste) resultierenden Störungen des Betriebsablaufes zu reduzieren. Aus wirtschaftlichen Gründen kann üblicherweise kein Personal für Streckenbegehungen und -begutachtungen mehr vorgehalten werden. Es ist ein System anzustreben, welches weitgehend ohne Aufsicht seitens Bedienpersonal arbeitet und nur im Bedarfsfall zuvor definierte Vegetationszustände signalisiert. Auf dieser Basis können dann in nachgelagerten Prozessen dispositive Massnahmen ergriffen werden.

Diese Aufgabe wird in Verbindung mit dem Oberbegriff des Patentanspruches 1 erfindungsgemäß dadurch gelöst, dass
- mittels pixelweiser Differenzbildung zwischen den jeweiligen Grauwert-Intensitäten eines von der Sensoreinheit erfassten Bildes des sichtbaren oder ultravioletten Farbkanals und eines von der Sensoreinheit erfassten Bildes des infraroten Farbkanals ein ein- oder zweidimensionales Differenzbild des von der Sensoreinheit erfassten räumlichen Bereiches erzeugt wird,
- mittels einer Schwellwert-Analyse der Pixelpunkte dieses Differenzbildes eine die Vegetationsregion charakterisierende Menge ein- oder zweidimensionaler Pixel extrahiert wird,
- sowie eine mindestens einen der Vegetationsregion zugeordneten Pixelpunkt enthaltende Untermenge von Pixelpunkten des von der Sensoreinheit aufgenommenen Bildes ausgewählt, unter Verwendung an sich bekannter korrelations- und / oder merkmalsbasierter Mustervergleichsverfahren in einem von einer zweiten Kamera aufgenommenen Bild desselben Raumbereiches den zu dieser Untermenge am stärksten korrelierenden Pixelbereich bestimmt und mittels an sich bekannter stereogrammetrischer Verfahren die Entfernung dieses mindestens einen der Vegetationsregion zuzuordnenden Pixelpunktes von der aus Sensoreinheit und zweiter Kamera aufgespannten Ebene ermittelt wird.

Da die meisten Nicht-Vegetationsobjekte im sichtbaren bzw. ultravioletten und infraroten Spektralbereich ungefähr gleiche Reflektivität aufweisen, Vegetationsobjekte hingegen im Infrarotbereich eine deutlich höhere Reflektivität als im sichtbaren bzw. ultravioletten Bereich zeigen, lässt sich aus dem Differenzbild von Infrarotaufnahme und normalem Grauwert-Bild bzw. Ultraviolettaufnahme ein Unterscheidungskriterium für Vegetation zu Nicht-Vegetation ableiten. Ein derartiges Differenzbild lässt sich nicht nur mittels einer aus zwei separaten Sensoren für die Detektion infraroter und sichtbarer bzw. ultravioletter Strahlung bestehenden Sensoreinheit erzeugen, sondern auch mittels eines einzigen mit einem Strahlenteiler versehenen Sensors. Bei dieser Variante kann man auf Korrekturmassnahmen zum Ausgleich des lateralen Achsenversatzes der beiden Einzelsensoren verzichten.
Es ist weiterhin denkbar, ortsfest entlang des Verkehrsweges installierte Nicht-Vegetationsobjekte zusätzlich zu ihrer sensorischen Detektion durch Vergleich mit einer computergestützten Datenbasis, in der deren Position und räumliche Orientierung gespeichert sind, zu verifizieren.
Es ist in diesem Zusammenhang als selbstverständlich vorauszusetzen, dass sich die Anwendung des erfindungsgemässen Verfahrens nicht nur auf die Wartung von Verkehrswegen anwenden lässt, sondern in umfassender Weise auch weitergehende Anwendungen in der Landwirtschaft - speziell im Obst- und Weinbau - denkbar sind.

Eine sinnvolle Alternativlösung sieht vor, dass das unter Verwendung von Mustervergleichsverfahren im sichtbaren Spektralbereich aufgenommene Bild desselben Raumbereiches mittels der die Reflektivität der betrachteten Objekte im infraroten und sichtbaren Spektralbereich kombinierenden ersten Sensoreinheit aufgenommen wird, während diese Sensoreinheit axial entlang einer zum Verkehrsweg näherungsweise parallelen Raumgeraden verschoben wird. Damit kann auf die zweite Kamera verzichtet werden, wenn in kurzer zeitlicher Folge (bzw. mit hoher Abtastrate) mit der ersten (und in diesem Fall einzigen) Sensoreinheit zwei Aufnahmen desselben Raumbereiches vollzogen und gegeneinander abgeglichen werden.

Das erfindungsgemässe Verfahren sieht ferner vor, dass aus der Gesamtmenge der ermittelten dreidimensionalen Koordinaten messtechnisch erfasster Vegetationsobjekte die innerhalb und /oder ausserhalb eines definierbaren dreidimensionalen Raumes liegenden Vegetationsobjekte extrahiert werden. Dies ist insbesondere sinnvoll, wenn hierzu ein entlang des Verkehrsweges verlaufender, von Vegetation freizuhaltender Raum bestimmt wird.

In einem weiteren erfindungsgemässen Verfahrensschritt werden in diskreten Schritten entlang der Tiefenachse des Erfassungssystems jeweils die Gesamtmenge der auf einer zu dieser Achse lotrechten Ebene liegenden, den freizuhaltenden Raum verletzenden Vegetationsobjekte erfasst und in eine Häufigkeitsverteilung dieser den freizuhaltenden Raum verletzender Vegetationsobjekte in Bezug auf die Tiefenachse des Erfassungsystems und / oder die Längenkoordinate des Verkehrsweges überführt. Somit erhält man ein Histogramm, anhand dessen auf einfache Weise die im Koordinatensystem des Verkehrsweges dargestellte Orte ablesbar sind, an denen Rückschnittmassnahmen an der Vegetation erforderlich sind.

Es ist besonders vorteilhaft, wenn bei Überschreiten eines vorgebbaren Grenzwertes der Häufigkeitsverteilung der den freizuhaltenden Raum verletzenden Vegetationsobjekte in Bezug auf die Längenkoordinate des Verkehrsweges ein Signal zur Auslösung von Massnahmen zur Vegetationsreduktion ausgegeben wird. Auf diese Weise ist ein bedienungsfreundliches System gestaltbar, welches während einer Messfahrt weitgehend unbeaufsichtigt eine Erfassung und Bewertung der den Verkehrsweg begleitenden Vegetationssituation durchführt und nur im Bedarfsfall notwendige Massnahmen an das Bedien- bzw. Auswertepersonal signalisiert.

Ferner umfasst der erfinderische Gedanke eine Vorrichtung zur Durchführung des Verfahrens zur Erkennung und Vermessung von Vegetation im räumlichen Umfeld von Verkehrswegen, mindestens eine Sensoreinheit zur Erfassung der elektromagnetischen Reflektivität im infraroten und sichtbaren Spektralbereich und / oder im infraroten und ultravioletten Spektralbereich der in diesem Raumbereich befindlichen Objekte sowie eine zweite Kamera zur Aufnahme eines Bildes desselben Raumbereiches aufweist. Die zweite Kamera muss dabei mindestens einen der in der Sensoreinheit empfangenen und verarbeiteten Spektralbereiche detektieren.

Eine Modifikation sieht vor, dass ausschliesslich die Sensoreinheit unter Verzicht auf die zweite Kamera die erforderlichen Raumabbildungen erstellt, während sie sich entlang einer Raumachse bewegt. Somit kann auf die zweite Kamera verzichtet werden. Allerdings muss die Sensoreinheit eine ausreichend hohe Abtastrate realisieren können, damit das Messfahrzeug eine akzeptable Messgeschwindigkeit fahren kann.

Um die Vorrichtung zur Erkennung und Vermessung der Vegetation auch im Nachtbetrieb einsetzen zu können, ist eine - idealerweise für das menschliche Auge unsichtbare - gleichzeitige Beleuchtung mittels ultravioletter und infraroter Bestrahlung vorgesehen.

Eine Ausführungsvariante sieht vor, dass Sensoreinheit und zweite Kamera im Stirnbereich eines Schienenfahrzeuges montiert sind, wobei die von Sensoreinheit und zweiter Kamera aufgespannte Bildebene im wesentlichen lotrecht zur Fahrtrichtung des Schienenfahrzeuges ausgerichtet ist. Auf diese Weise ist ein Messfahrzeug realisierbar, welches weitgehend selbsttätig die Aufwuchssituation beiderseits des Schienenweges erfassen und bewerten kann.

Der Erfindungsgedanke wird in nachfolgenden Figuren visualisiert. Es zeigen:

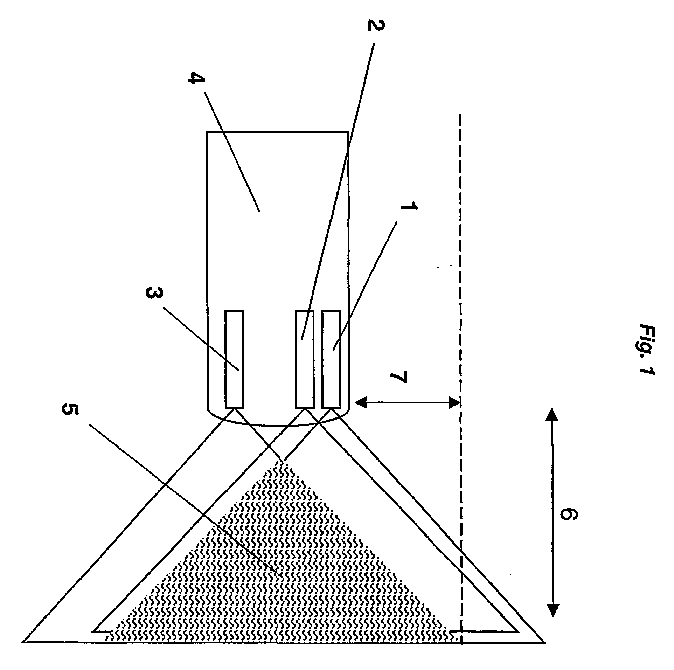

- **Figur 1**: schematische Darstellung des Versuchsaufbaus
- **Figur 2**: von Kamera (2) erfasstes Grauwertbild (sichtbarer Spektralbereich)
- **Figur 3**: von Kamera (1) erfasstes Infrarot-Bild
- **Figur 4**: Differenzbild der Bilder von Kamera (1) und Kamera (2)
- **Figur 5**: farblich codierte Tiefenkarte
- **Figur 6**: Auswertebild mit farblich markierten Bereichen, in denen das freizuhaltende Profil verletzt wird

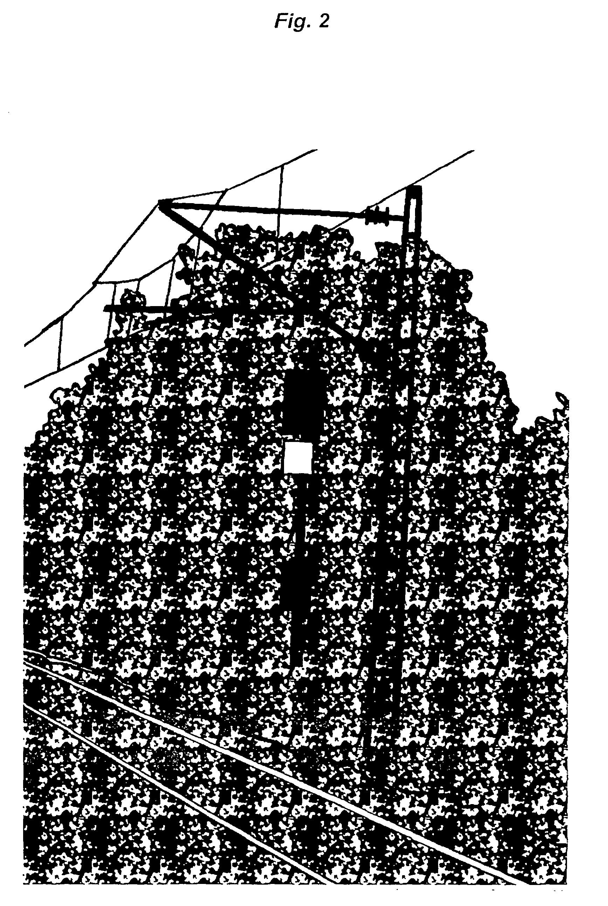

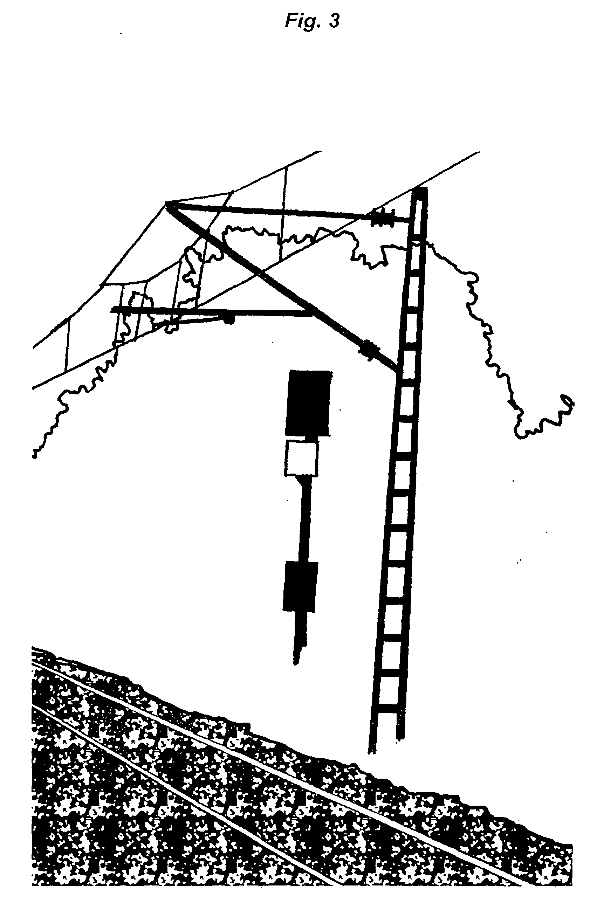

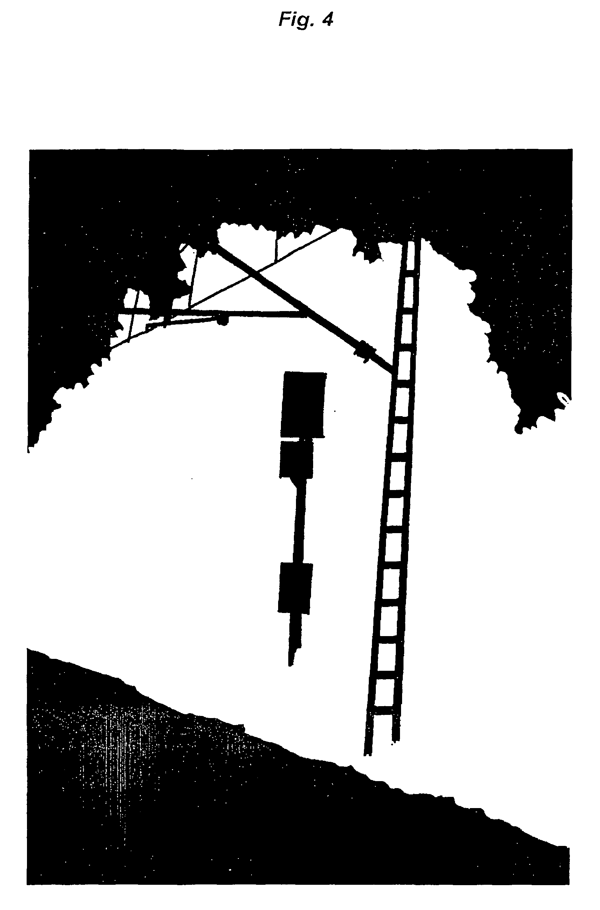

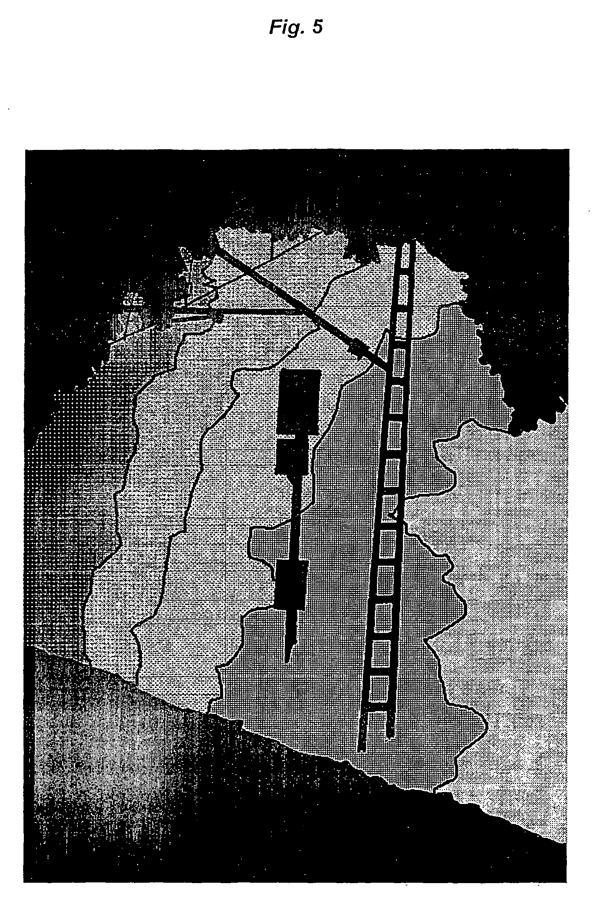

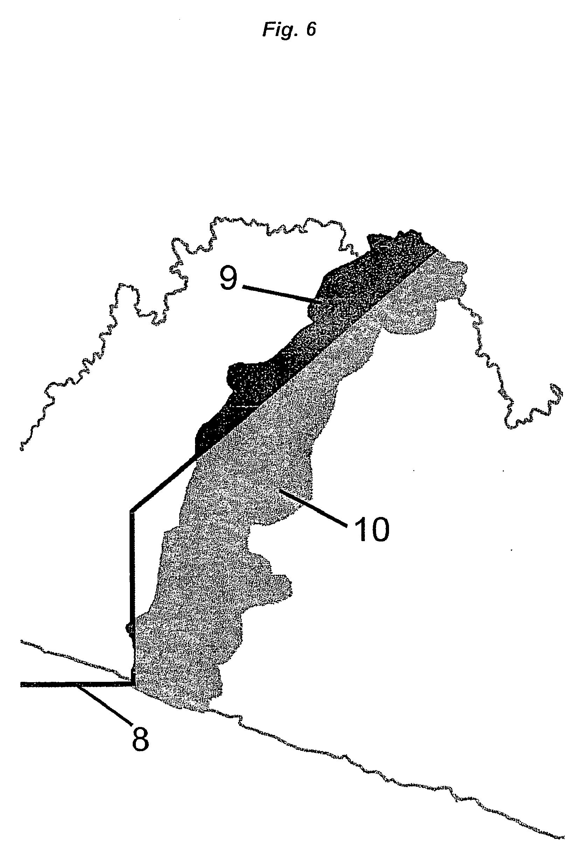

Das hier vorgestellte Verfahren zur Erkennung und Vermessung von Vegetation soll für der Deutschen Bahn AG eine Übersicht über den Bewuchs entlang ihres Streckennetzes geben und eine quantitative Aussage über die Dringlichkeit der Reduktion von Vegetation erlauben. Dabei soll insbesondere die Vegetation neben dem Gleiskörper bewertet werden.
Der Versuchsaufbau besteht aus insgesamt drei standardmässigen Progressive-Scan CCD-Kameras (1, 2, 3) mit einer Auflösung von 1024² Pixel. Alle drei Kameras (1, 2, 3) sind kollinear auf einem verbindenden balkenförmigen Geräteträger installiert, wobei zwei der drei Kameras (1, 2) einen möglichst kleinen Abstand (ca. 10 cm) zueinander aufweisen. Die dritte Kamera (3) wird in einem Abstand zwischen 30 und 60 cm montiert. Der Geräteträger ist starr auf einem als Messfahrzeug dienenden Schienenfahrzeug (4) montiert, wobei gewährleistet ist, dass der gemeinsame Sichtbereich (5) der Kameras (1, 2, 3) nicht durch Fahrzeuganbauten beeinträchtigt wird. Ebenso sind die drei Kameras so ausgerichtet, dass ihre Bildebenen lotrecht zur Fahrtrichtung des Messfahrzeuges (4) ausgerichtet sind. Vor jede Kamera wird ein Objektiv derselben Brennweite (z.B. 50 mm) geschraubt. Eine der beiden Kameras (1, 2) wird mit einem IR-Filter versehen, der nur infrarote Strahlen durchlässt. In den Versuchen wurde ein Filter Heliopan RG780 bevorzugt verwendet. Dabei ist darauf zu achten, dass die Kameras derart justiert werden oder die Bilder derart nachverarbeitet werden, dass nach erfolgter Generierung eines Differenzbildes jedes Nicht-Vegetationsobjekt jeweils in allen Bildern eine ungefähr gleiche Helligkeit aufweist. Es wurde experimentell ermittelt, dass unter Verwendung des oben genannten Filters ein Öffnen der Blende bei der mit dem Filter versehenen Kamera (1) ausreichend ist. Im vorliegenden Fall wurde ein Unterschied von zwei Blendenstufen gewählt.
Prinzipiell eignen sich auch Infrarot-Filter mit anderen Wellenlängenbereichen bis ca. 1200 nm, doch nimmt die Empfindlichkeit der verwendeten Kameras bei größeren Wellenlängen überproportional ab, so dass auf den Bildern teilweise nichts mehr zu sehen ist und / oder die Belichtungszeit erhöht werden muss, so dass bei höheren Geschwindigkeiten ab ca. 60 km/h die Bewegungsunschärfe einen großen Einfluss findet. Filter mit geringeren Infrarot-Wellenlängenbereichen haben das Problem, dass sie auch Licht im sichtbaren Bereich durchlassen, für welches der CCD-Chip der Kamera empfindlicher ist. Somit ist eine Unterscheidung zwischen Vegetation und Nicht-Vegetation in diesen Bereichen schwieriger oder nicht mehr möglich.
Die Erkennung bzw. Segmentierung der Vegetation erfolgt über Bildung einer pixelweisen Differenz zwischen dem infrarot-gefilterten Bild von Kamera (1) (Figur 3) und dem im sichtbaren Bereich aufgenommenen Grauwert-Bild von Kamera (2) (Figur 2). In dem resultierenden Differenzbild (Figur 4) erscheinen alle vegetationslosen Bereiche einheitlich dunkel, während Bereiche mit Vegetation deutlich heller erscheinen. Mittels einer Schwellwert-Analyse kann dieses Differenzbild in einen Vegetationsbereich und einen invertierten bzw. Nicht-Vegetationsbereich aufgeteilt werden. Für das somit erhaltene, binär codierte (Vegetation; Nicht-Vegetation) Bild wird sodann die Tiefeninformation eines jeden im Vegetationsbereich liegenden Bildpixels generiert.
Hierzu wird ein Bereich aus dem Bild von Kamera (2) auswählt, der zumindest den Vegetationsbereich schneidet; das heisst: mindestens ein Pixel dieses Bildbereiches muss die binäre Codierung "Vegetation" tragen. Die Konturbegrenzung dieses Bildbereiches ist im Prinzip beliebig; die Verwendung eines Rechtecks hat sich jedoch als zweckmässig erwiesen, da auf diese Weise das Bild am effizientesten analysiert werden kann. Dieser ausgewählte Bereich wird nun entlang der sogenannten Epipolarlinie in das von Kamera (3) aufgenommene Bild verschoben. Gemäss einem an sich bekannten Prinzip der korrelationsbasierten Merkmalsanalyse wird für jede Verschiebeposition die Summe der absoluten Differenzen für den ausgewählten Bildbereich und den darunter liegenden Bildbereich von Kamera (3) ermittelt. Die Stelle, an der die Summe der absoluten Differenzen am geringsten ist, wird für die Triangultationsmessung verwendet. Ein fortlaufendes Anwenden dieses Matching-Algorithmus auf jeden im Bildbereich sichtbaren Vegetationspunkt liefert für jeden dieser Punkte eine Entfernungsgrösse. In Verbindung mit dem horizontalen und vertikalen Abstand zur Randkontur des Bildbereiches ist schlussendlich jeder als der "Vegetation" zugehörig erkannte Bildpunkt im dreidimensionalen Kamerakoordinatensystem eindeutig beschrieben.
Anstelle der Summe der absoluten Differenzen können natürlich auch andere aus dem Stand der Technik bekannte Korrelationsmaße verwendet werden. Ebenso ist die Anwendung eines merkmalsbasiertes Matchings denkbar; dieses erscheint jedoch dem korellationsbasierten Matching unterlegen, da die entlang einer Bahnstrecke aufgenommenen Bilder einen hohen Dynamikbereich besitzen. Es kommt deshalb vor, dass innerhalb dichter Vegetation nur marginale Grauwertunterschiede vorherrschen, weshalb an diesen Stellen entweder kein Merkmal oder ein Merkmal nur ungenau bestimmt werden kann. Diese aufwendige Extraktion von Merkmalen entfällt hingegen beim korellationsbasierten Matching.
Zur weitergehenden Visualisierung können die Daten in Form einer Tiefen- oder Höhenkarte (siehe Figur 5) veranschaulicht werden. Eine farbliche Codierung gibt die zur Bildebene vertikale Koordinate des Bildpixels wieder. Die errechneten dreidimensionalen Koordinaten werden anschliessend auf das Koordinatensystem der Gleisstrecke umgerechnet, so dass zu jeder Streckenposition ein innerhalb der zur Streckenlängsachse lotrechten Ebene liegende Querschnitt der Vegetationskontur angezeigt und gespeichert wird. Für die Umrechnung auf die Streckenposition ist zusätzlich eine positionsgebende Einheit (wie beispielsweise GPS) erforderlich.
Jeder Querschnitte der Vegetationskontur wird sodann mit einem zuvor definierten Begrenzungsprofil (8) verglichen, welches den freizuhaltenden Raum definiert (siehe Figur 6). Befindet sich Vegetation innerhalb dieses freizuhaltenden Raumes (9), so wird diese Stelle markiert und die Größe der verletzenden Vegetation in einer Datei gespeichert. Aus dieser Datei kann ein visualisierendes Histogramm erstellt werden, das die Menge der den freizuhaltenden Raum verletzenden Vegetation in Bezug auf die Kilometrierung der Gleisstrecke angibt. Die so gewonnenen Daten werden dann für die Disposition der vegetativen Rückschnitt-Massnahmen eingesetzt.

### Bezugszeichenliste:

- 1: Progressive-Scan CCD-Kamera mit Infrarot-Filter
- 2: Progressive-Scan CCD-Kamera
- 3: Progressive-Scan CCD-Kamera
- 4: Messfahrzeug
- 5: Gemeinsamer Sichtbereich der Kameras
- 6: Tiefenerstreckung des Arbeitsbereiches (ca. 50 - 60 m)
- 7: Laterale Erstreckung des Arbeitsbereiches (ca. 10 m)
- 8: Profillinie
- 9: Bereich gefährdender Vegetation
- 10: Bereich nicht-gefährdender Vegetation

## Patentansprüche

1. Verfahren zur Erkennung und Vermessung von Vegetation im räumlichen Umfeld von Verkehrswegen unter Verwendung einer die Reflektivität der in diesem Raumbereich befindlichen Objekte im infraroten und sichtbaren Spektralbereich und / oder im infraroten und ultravioletten Spektralbereich kombinierenden Sensoreinheit (1, 2),
**dadurch gekennzeichnet, dass**
• mittels pixelweiser Differenzbildung zwischen den jeweiligen Grauwert-Intensitäten eines von der Sensoreinheit (1, 2) erfassten Bildes des sichtbaren oder ultravioletten Farbkanals und eines von der Sensoreinheit (1, 2) erfassten Bildes des infraroten Farbkanals ein ein- oder zweidimensionales Differenzbild des von der Sensoreinheit (1, 2) erfassten räumlichen Bereiches erzeugt wird,
• mittels einer Schwellwert-Analyse der Pixelpunkte dieses Differenzbildes eine die Vegetationsregion charakterisierende Menge ein- oder zweidimensionaler Pixel extrahiert wird,
• sowie eine mindestens einen der Vegetationsregion zugeordneten Pixelpunkt enthaltende Untermenge von Pixelpunkten des von der Sensoreinheit (1, 2) aufgenommenen Bildes ausgewählt, unter Verwendung an sich bekannter korrelations- und / oder merkmalsbasierter Mustervergleichsverfahren in einem von einer zweiten Kamera (3) aufgenommenen Bild desselben Raumbereiches den zu dieser Untermenge am stärksten korrelierenden Pixelbereich bestimmt und mittels an sich bekannter stereogrammetrischer Verfahren die Entfernung dieses mindestens einen der Vegetationsregion zuzuordnenden Pixelpunktes von der aus Sensoreinheit (1, 2) und zweiter Kamera (3) aufgespannten Ebene ermittelt wird.

2. Verfahren zur Erkennung und Vermessung von Vegetation im räumlichen Umfeld von Verkehrswegen nach Anspruch 1, **dadurch gekennzeichnet, dass** das unter Verwendung Mustervergleichsverfahren im sichtbaren Spektralbereich aufgenommene Bild desselben Raumbereiches mittels der die Reflektivität der betrachteten Objekte im infraroten und sichtbaren Spektralbereich kombinierenden ersten Sensoreinheit (1, 2) aufgenommen wird, während diese Sensoreinheit axial entlang einer zum Verkehrsweg näherungsweise parallelen Raumgeraden verschoben wird.

3. Verfahren zur Erkennung und Vermessung von Vegetation im räumlichen Umfeld von Verkehrswegen nach einem der Ansprüche 1 bis 2, **dadurch gekennzeichnet, dass** aus der Gesamtmenge der ermittelten dreidimensionalen Koordinaten messtechnisch erfasster Vegetationsobjekte die innerhalb und / oder ausserhalb eines definierbaren dreidimensionalen Raumes liegenden Vegetationsobjekte extrahiert werden.

4. Verfahren zur Erkennung und Vermessung von Vegetation im räumlichen Umfeld von Verkehrswegen nach einem der Ansprüche 1 bis 3, **dadurch gekennzeichnet, dass** der definierbare dreidimensionale Raum als ein von Vegetationsobjekten freizuhaltender Raum entlang von Verkehrswegen definiert wird.

5. Verfahren zur Erkennung und Vermessung von Vegetation im räumlichen Umfeld von Verkehrswegen nach einem der Ansprüche 1 bis 4, **dadurch gekennzeichnet, dass** in diskreten Schritten entlang der Tiefenachse des Erfassungssystems jeweils die Gesamtmenge der auf einer zu dieser Achse lotrechten Ebene liegenden, den freizuhaltenden Raum verletzenden Vegetationsobjekte erfasst und in eine Häufigkeitsverteilung dieser den freizuhaltenden Raum verletzender Vegetationsobjekte in Bezug auf die Tiefenachse des Erfassungsystems und / oder die Längenkoordinate des Verkehrsweges überführt wird.

6. Verfahren zur Erkennung und Vermessung von Vegetation im räumlichen Umfeld von Verkehrswegen nach mindestens einem der Ansprüche 1 bis 5, **dadurch gekennzeichnet, dass** bei Überschreiten eines vorgebbaren Grenzwertes der Häufigkeitsverteilung der den freizuhaltenden Raum verletzenden Vegetationsobjekte in Bezug auf die Längenkoordinate des Verkehrsweges ein Signal zur Auslösung von Massnahmen zur Vegetationsreduktion ausgegeben wird.

7. Vorrichtung zur Durchführung des Verfahrens zur Erkennung und Vermessung von Vegetation im räumlichen Umfeld von Verkehrswegen nach mindestens einem der Ansprüche 1 bis 6, **dadurch gekennzeichnet, dass** die Vorrichtung mindestens eine Sensoreinheit (1, 2) zur Erfassung der elektromagnetischen Reflektivität im infraroten und sichtbaren Spektralbereich und / oder im infraroten und ultravioletten Spektralbereich der in diesem Raumbereich befindlichen Objekte sowie eine zweite Kamera (3) zur Aufnahme eines Bildes desselben Raumbereiches aufweist.

8. Vorrichtung zur Durchführung des Verfahrens zur Erkennung und Vermessung von Vegetation im räumlichen Umfeld von Verkehrswegen nach mindestens einem der Ansprüche 1 bis 6, **dadurch gekennzeichnet, dass** die Vorrichtung mindestens eine mit hoher Abtastrate arbeitende und längs einer Raumgeraden verfahrbar gelagerte Sensoreinheit (1, 2) zur Erfassung der elektromagnetischen Reflektivität im infraroten und sichtbaren Spektralbereich und / oder im infraroten und ultravioletten Spektralbereich der in diesem Raumbereich befindlichen Objekte aufweist.

9. Vorrichtung zur Durchführung des Verfahrens zur Erkennung und Vermessung von Vegetation im räumlichen Umfeld von Verkehrswegen nach Anspruch 7 oder 8, **dadurch gekennzeichnet, dass** sie über eine Beleuchtungsvorrichtung zur gleichzeitigen Ausleuchtung des Raumbereiches im ultravioletten oder infraroten Spektralbereich verfügt.

10. Vorrichtung zur Durchführung des Verfahrens zur Erkennung und Vermessung von Vegetation im räumlichen Umfeld von Verkehrswegen nach mindestens einem der Ansprüche 7 bis 9, **dadurch gekennzeichnet, dass** Sensoreinheit und zweite Kamera im Stirnbereich eines Schienenfahrzeuges (4) montiert sind, wobei die von Sensoreinheit (1, 2) und zweiter Kamera (3) aufgespannte Bildebene im wesentlichen lotrecht zur Fahrtrichtung des Schienenfahrzeuges ausgerichtet ist.

## Claims

1. A method for sensing and measuring vegetation in the spatial surroundings of traffic routes by utilizing a sensor unit (1, 2) that combines the reflectivity of the objects located in this spatial area in the infrared and visible spectral regions and/or in the infrared and ultraviolet spectral regions,
**characterized in that**
- one-dimensional or two-dimensional difference image of the spatial area sensed by the sensor unit (1, 2) is generated by means of pixel-by-pixel subtraction between the respective gray scale value intensities of the sensor unit-recorded image of the visible or ultraviolet color channel and of a sensor unit-recorded image of the infrared color channel,
- a quantity of one-dimensional or two-dimensional pixels that characterizes the vegetation region is extracted by means of a threshold value analysis of the pixel points of this difference image, and
- a subset of pixel points of the image recorded by the sensor unit (1, 2) which contains at least one pixel point assigned to the vegetation region is selected, wherein the pixel area with the highest correlation to this subset is determined by utilizing known correlation-based and/or characteristic-based pattern comparison methods in an image of the same spatial area that is recorded by a second camera (3), and wherein the removal of this at least one pixel point to be assigned to the vegetation region from the plane defined by the sensor unit (1, 2) and the second camera (3) is determined by utilizing known stereogrammetric methods.

2. The method for sensing and measuring vegetation in the spatial surroundings of traffic routes according to Claim 1, **characterized in that** the image of the same spatial area recorded in the visible spectral region by utilizing pattern comparison methods is recorded by means of the sensor unit (1, 2) that combines the reflectivity of the objects located in this spatial area in the infrared and visible spectral region while this sensor unit is axially displaced along a straight line in space that extends approximately parallel to the traffic route.

3. The method for sensing and measuring vegetation in the spatial surroundings of traffic routes according to Claim 1 or 2, **characterized in that** the vegetation objects lying inside and/or outside a definable three-dimensional space are extracted from the universal set of the determined three-dimensional coordinates of metrologically sensed vegetation objects.

4. The method for sensing and measuring vegetation in the spatial surroundings of traffic routes according to one of Claims 1 to 3, **characterized in that** the definable three-dimensional space is defined in the form of a space along traffic routes to remain clear of vegetation objects.

5. The method for sensing and measuring vegetation in the spatial surroundings of traffic routes according to one of Claims 1 to 4, **characterized in that** the universal set of the vegetation objects infringing on the space to remain clear which lie on an axis extending perpendicular to the depth axis of the sensing system is respectively determined in discrete steps along this depth axis of the sensing system and transferred into a frequency distribution of these vegetation objects infringing on the space to remain clear in relation to the depth axis of the sensing system and/or the longitudinal coordinate of the traffic route.

6. The method for sensing and measuring vegetation in the spatial surroundings of traffic routes according to at least one of Claims 1 to 5, **characterized in that** a signal for initiating measures to reduce the vegetation is generated when exceeding a predetermined threshold value of the frequency distribution of vegetation objects infringing on the space to remain clear in relation to the longitudinal coordinates of the traffic route.

7. A device for carrying out the method for sensing and measuring vegetation in the spatial surroundings of traffic routes according to at least one of Claims 1 to 6, **characterized in that** the device features at least one sensor unit (1, 2) for sensing the electromagnetic reflectivity of the objects located in this spatial area in the infrared and visible spectral region and/or in the infrared and ultraviolet spectral region, as well as a second camera (3) for recording an image of the same spatial area.

8. A device for carrying out the method for sensing and measuring vegetation in the spatial surroundings of traffic routes according to at least one of Claims 1 to 6, **characterized in that** the device features at least one sensor unit (1, 2) that operates with a higher sampling rate and can be displaced along a straight line in space, wherein said sensor unit serves for sensing the electromagnetic reflectivity of the objects located in this spatial area in the infrared and visible spectral region and/or in the infrared and ultraviolet spectral region.

9. The device for carrying out the method for sensing and measuring vegetation in the spatial surroundings of traffic routes according to Claim 7 or 8, **characterized in that** it features an illuminating device for simultaneously illuminating the spatial area in the ultraviolet or infrared spectral region.

10. The device for carrying out the method for sensing and measuring vegetation in the spatial surroundings of traffic routes according to at least one of Claims 7 to 9, **characterized in that** the sensor unit and the second camera are mounted in the front region of a rail vehicle (4), wherein the image plane defined by the sensor unit (1, 2) and the second camera (3) is essentially aligned perpendicular to the moving direction of the rail vehicle.

## Revendications

1. Procédé de détection et d'évaluation de végétation dans l'environnement spatial de voies de circulation en utilisant une unité de capteur (1, 2) combinant la réflectivité des objets se trouvant dans cette zone spatiale dans la plage spectrale infrarouge et visible et/ou dans la plage spectrale infrarouge et ultraviolette,
**caractérisé en ce que**
- par calcul de différence de pixels entre les intensités des valeurs de gris respectives d'une image enregistrée du canal coloré visible ou ultraviolet et d'une image enregistrée par l'unité de capteur (1, 2) du canal coloré infrarouge, on génère une image différentielle uni- ou bidimensionnelle de la zone spatiale enregistrée par l'unité de capteur (1, 2),
- par analyse de la valeur seuil des points de pixels de cette image différentielle, on extrait une quantité de pixels uni- ou bidimensionnels caractérisant la région de végétation,
- de même qu'on sélectionne une sous-quantité de points de pixels contenant au moins un point de pixel associé à la région de végétation de l'image prise par l'unité de capteur (1, 2), qu'on définit, en utilisant des procédés connus en eux-mêmes de comparaison de motifs basés sur des corrélations et/ou des caractéristiques dans une image prise par une deuxième caméra (3) de la même zone spatiale, la zone de pixels en plus forte corrélation avec cette sous-quantité et qu'on détermine, par des procédés stéréogrammétriques connus en eux-mêmes l'éloignement de cet au moins un point de pixels à associer à la région de végétation par rapport au plan circonscrit par l'unité de capteur (1, 2) et la deuxième caméra (3).

2. Procédé de détection et d'évaluation de végétation dans l'environnement spatial de voies de circulation selon la revendication 1, **caractérisé en ce que** l'image de la même zone spatiale prise en utilisant des procédés de comparaison de motifs dans la zone spectrale visible est prise au moyen de la première unité de capteur (1, 2) combinant la réflectivité des objets observés dans la zone infrarouge et visible, pendant que cette unité de capteur est déplacée axialement le long d'une droite spatiale approximativement parallèle à la voie de circulation.

3. Procédé de détection et d'évaluation de végétation dans l'environnement spatial de voies de circulation selon une des revendications 1 à 2, **caractérisé en ce qu'**on extrait de la quantité totale des coordonnées tridimensionnelles déterminées des objets de végétation enregistrés par technique de mesure les objets de végétation se trouvant à l'intérieur et/ou à l'extérieur d'un espace tridimensionnel définissable.

4. Procédé de détection et d'évaluation de végétation dans l'environnement spatial de voies de circulation selon une des revendications 1 à 3, **caractérisé en ce que** l'espace tridimensionnel définissable est défini sous forme d'un espace à garder exempt d'objets de végétation le long de voies de circulation.

5. Procédé de détection et d'évaluation de végétation dans l'environnement spatial de voies de circulation selon une des revendications 1 à 4, **caractérisé en ce qu'**on enregistre respectivement en étapes discrètes, le long de l'axe de profondeur du système d'enregistrement, la quantité totale d'objets de végétation se trouvant sur un plan perpendiculaire à cet axe et indésirables dans l'espace à garder libre et qu'on la transforme en une répartition de fréquence des objets de végétation indésirables dans l'espace à garder libre par rapport à l'axe de profondeur du système d'enregistrement et/ou aux cordonnées de longueur de la voie de circulation.

6. Procédé de détection et d'évaluation de végétation dans l'environnement spatial de voies de circulation selon au moins une des revendications 1 à 5, **caractérisé en ce qu'**en cas de dépassement d'une valeur limite prescriptible de la répartition de fréquence des objets de végétation indésirables dans l'espace à garder libre, on émet, en relation avec les coordonnées de longueur de la voie de circulation, un signal de déclenchement de mesures de réduction de la végétation.

7. Dispositif pour la réalisation du procédé de détection et d'évaluation de végétation dans l'environnement spatial de voies de circulation selon au moins une des revendications 1 à 6, **caractérisé en ce que** ce dispositif comporte au moins une unité de capteur (1, 2) pour enregistrer la réflectivité électromagnétique dans la plage spectrale infrarouge et visible et/ou dans la plage spectrale infrarouge et ultraviolette des objets se trouvant dans cette zone spatiale ainsi qu'une deuxième caméra (3) pour prendre une image de la même zone spatiale.

8. Dispositif pour la réalisation du procédé de détection et d'évaluation de végétation dans l'environnement spatial de voies de circulation selon au moins une des revendications 1 à 6, **caractérisé en ce que** ce dispositif comporte au moins une unité de capteur (1, 2) fonctionnant avec une grande vitesse de palpage et installée de manière à pouvoir se déplacer le long d'une droite spatiale pour enregistrer la réflectivité électromagnétique dans la plage spectrale infrarouge et visible et/ou dans la plage spectrale infrarouge et ultraviolette des objets se trouvant dans cette zone spatiale.

9. Dispositif pour la réalisation du procédé de détection et d'évaluation de végétation dans l'environnement spatial de voies de circulation selon la revendication 7 ou 8, **caractérisé en ce qu'**il dispose d'un dispositif d'éclairage pour éclairer simultanément la zone spatiale dans la plage spectrale ultraviolette ou infrarouge.

10. Dispositif pour la réalisation du procédé de détection et d'évaluation de végétation dans l'environnement spatial de voies de circulation selon au moins une des revendications 7 à 9, **caractérisé en ce que** l'unité de capteur et la deuxième caméra sont montées dans la zone frontale d'un véhicule ferroviaire (4), le plan d'image circonscrit par l'unité de capteur (1, 2) et la deuxième caméra (3) étant orienté sensiblement à la perpendiculaire du sens de circulation du véhicule ferroviaire.
